# EUROPÄISCHE PATENTANMELDUNG

(11) **EP 1 061 600 A2**
(43) Veröffentlichungstag der Anmeldung: **20.12.2000**
(21) Anmeldenummer: 00250180.7
(22) Anmeldetag: 09.06.2000
(51) Int. Cl.: H01M 8/04

(54) **Brennstoffzellensystem**

(30) Priorität: 14.06.1999 DE 19992806
(71) Anmelder: Atecs Mannesmann AG, 40213 Düsseldorf (DE)
(72) Erfinder: Herdeg, Wolfgang, 72141 Walddorfhäslach (DE); Zapp, Thomas, 44265 Dortmund (DE)
(74) Vertreter: Meissner, Peter E., Dipl.-Ing.

(57) **Zusammenfassung**

Es wird ein Brennstoffzellensystem (10) beschrieben, mit einer Brennstoffzelle (20), die eine Zuleitung (23) für einen Brennstoff und eine Zuleitung (25) für ein Oxidationsmittel aufweist. Um eine ausreichende Befeuchtung der Brennstoffzellen-Membran (27) auch während des Anfahrens der Brennstoffzelle (20) zu gewährleisten, ist ein Flüssigkeitsspeicher (30) mit einer darin befindlichen Flüssigkeit (31) vorgesehen, über die der Brennstoff und/oder das Oxidationsmittel vor dem Eintritt in die Brennstoffzelle (20) befeuchtet werden. Dadurch wird auch beim Anfahren der Brennstoffzelle (20) eine ausreichende Befeuchtung der Brennstoffzellen-Membran (27) gewährleistet. Um bei niedrigen Temperaturen ein Einfrieren der Flüssigkeit (31) zu verhindern, ist eine Vermischung der Flüssigkeit mit einem Forstschutzmittel vorgesehen. Damit das Frostschutzmittel nicht in die Brennstoffzelle gelangt, wird die aus dem Flüssigkeitsspeicher (30) entnommene Flüssigkeit durch eine Heizeinrichtung (40) soweit erwärmt, dass eine Verdampfung des Frostschutzmittels und eine Abtrennung von der Flüssigkeit erfolgt. Die Heizeinrichtung (40) kann eine als geschlossenes System ausgebildete Strömungsleitung (42) aufweist. Die Strömungsleitung (42) wird von einem Heizmedium durchströmt, das vor der Wärmeabgabe an die Flüssigkeit über einen Brenner (43) erwärmt wird.

## Beschreibung

Die vorliegende Erfindung betrifft ein Brennstoffzellensystem, mit einer Brennstoffzelle, die eine Zuleitung für einen Brennstoff und eine Zuleitung für ein Oxidationsmittel aufweist.

Brennstoffzellen sind bereits seit langem bekannt und haben insbesondere im Bereich der Automobilindustrie in den letzten Jahren erheblich an Bedeutung gewonnen.

Ähnlich wie Batteriesysteme erzeugen Brennstoffzellen elektrische Energie auf chemischem Wege, wobei die einzelnen Reaktanten kontinuierlich (Anoden- und Kathodengas) zugeführt und das Reaktionsprodukt kontinuierlich (Anoden- und Kathodenabgas) abgeführt werden. Dabei liegt den Brennstoffzellen das Funktionsprinzip zu Grunde, daß sich elektrisch neutrale Moleküle oder Atome miteinander verbinden und dabei Elektronen austauschen. Dieser Vorgang wird als Redoxprozeß bezeichnet. Bei der Brennstoffzelle werden die Oxidations- und Reduktionsprozesse räumlich getrennt, was beispielsweise über eine Membran erfolgen kann. Solche Membranen haben die Eigenschaft, Protonen auszutauschen, Gase jedoch zurückzuhalten. Die bei der Reduktion abgegebenen Elektronen lassen sich als Strom durch einen Verbraucher leiten, beispielsweise den Elektromotor eines Automobils.

Als gasförmige Reaktionspartner für die Brennstoffzelle werden beispielsweise Wasserstoff als Brennstoff (Anodengas) und Sauerstoff als Oxidationsmittel (Kathodengas) verwendet. Will man die Brennstoffzellen mit einem leicht verfügbaren und zu speichernden Brennstoff wie Erdgas oder Methanol betreiben, muß man diese Kohlenwasserstoffe zunächst in ein wasserstoffreiches Gas umwandeln, was beispielsweise durch Reformierung geschehen kann.

Damit die Brennstoffzelle ordnungsgemäß funktionieren kann, muß die Membran während des Betriebs ständig befeuchtet werden. Da bei der Erzeugung von Strom und Wärme in der Brennstoffzelle bei den entsprechenden Reaktionen Wasser entsteht, wird dieses Wasser in der Regel zum Befeuchten der Membran verwendet.

Ein Nachteil der bisher üblichen Befeuchtung der Brennstoffzellen-Membran besteht jedoch darin, daß insbesondere beim Anfahren des Brennstoffzellensystems zu diesem Zeitpunkt noch kein Wasser in der Brennstoffzelle produziert wird. Dennoch muß auch bereits zu diesem Zeitpunkt die Membran der Brennstoffzelle befeuchtet werden, um eine Beschädigung zu verhindern.

Die US 5 786 104 offenbart ein Brennstoffzellensystem, mit jeweils einer Zu- und Ableitung für einen Brennstoff und für ein Oxidationsmittel, wobei die Zuleitung für den Brennstoff und/oder die Zuleitung für das Oxidationsmittel mit einem Wasserspeicher verbunden ist. Die Zuleitungen sind jeweils mit einem statischen Mischer versehen, der beheizbar ist, um das aus dem Wasserspeicher zugeführte Wasser zu verdampfen und auf diese Weise eine Befeuchtung des Brennstoffs und/oder Oxidationsmittels, das der Brennstoffzelle zugeführt wird, zu erreichen. Über die Problematik der Befeuchtung bei Temperaturen unterhalb des Gefrierpunks von Wasser wird in dieser Schrift nichts ausgeführt.

Ausgehend vom genannten Stand der Technik liegt der vorliegenden Erfindung deshalb die Aufgabe zu Grunde, ein Brennstoffzellensystem bereitzustellen, bei dem die beschriebenen Nachteile vermieden werden. Insbesondere soll ein Brennstoffzellensystem bereitgestellt werden, bei dem insbesondere auch während des Anfahrprozesses der Brennstoffzelle genügend Feuchtigkeit zum Befeuchten der Brennstoffzellen-Membran zur Verfügung steht und das auch bei Umgebungstemperaturen unterhalb des Gefrierpunkts von Wasser voll funktionsfähig ist.

Diese Aufgabe wird durch eine Weiterbildung des vorstehend beschriebenen Brennstoffzellensystems gelöst, das erfindungsgemäß dadurch gekennzeichnet ist, daß eine Heizeinrichtung zum Beheizen der im Flüssigkeitsspeicher befindlichen Flüssigkeit vorgesehen ist, die in der Zuleitung für den Brennstoff und/oder in der Zuleitung für das Oxidationsmittel angeordnet und in ihrer Heizleistung auf eine vollständige Verdampfung eines in der Flüssigkeit enthaltenen Frostschutzmittels ausgelegt ist, und daß Einrichtungen zum Auffangen, Kondensieren und Zurückführen des verdampften Frostschutzmittels in den Flüssigkeitsspeicher vorgesehen sind.

Über den Flüssigkeitsspeicher können der Brennstoff und/oder das Oxidationsmittel befeuchtet werden, wobei über diese befeuchteten Gasströme anschließend eine Befeuchtung der Brennstoffzellen-Membran erfolgt. Insbesondere ist dadurch eine Befeuchtung der Brennstoffzellen-Membran auch während des Anfahrprozesses der Brennstoffzelle gewährleistet, da die in die Brennstoffzelle eintretenden Gasströme von Anfang an eine für die Befeuchtung der Brennstoffzellen-Membran ausreichende Feuchtigkeit aufweisen. Beschädigungen der Brennstoffzellen-Membran, die durch deren Austrocknung entstehen können, werden auf diese Weise verhindert.

Die im Flüssigkeitsspeicher befindliche Flüssigkeit kann somit insbesondere die Zeit zwischen dem Anfahren und der Wasserproduktion in der Brennstoffzelle überbrücken.

Als Brennstoff für die Brennstoffzelle kann beispielsweise, jedoch nicht ausschließlich, aus Methanol, Benzin, Erdgas, Methan, Kohlegas, Biogas oder dergleichen gewonnener Wasserstoff verwendet werden. Als Oxidationsmittel kann vorteilhaft Sauerstoff eingesetzt werden.

Wenn die im Flüssigkeitsbehälter befindliche Flüssigkeit Wasser ist, wird diesem zusätzlich z.B. Methanol oder ein anderes Frostschutzmittel beigemischt werden, um den Gefrierpunkt zu senken. Das Frostschutzmittel ist auf jeden Fall so ausgewählt, dass es einen niedrigeren Siedepunkt aufweist als die Flüssigkeit. Dabei ist die Heizeinrichtung in der Verbindungsleitung des Flüssigkeitsbehälters zur Zuleitung für den Brennstoff und/oder zur Zuleitung für das Oxidationsmittel vorgesehen, um das Frostschutzmittel aus dem Wasser herauszudestillieren, damit der Brennstoffzelle nur reines Wasser zugeführt wird. Zweckmäßigerweise ist die Heizeinrichtung z.B. in einer Einspritzdüse angeordnet, mit der das Wasser in den Gasstrom des Brennstoffs und/oder des Oxidationsmittels für die Brennstoffzelle eingespritzt werden kann. Die Heizeinrichtung ist in ihrer Leistung so ausgelegt, daß das in dem durch die Verbindungsleitung fließenden Wasserstrom enthaltene Frostschutzmittel vollständig verdampfen kann, bevor das Wasser mit dem jeweiligen der Brennstoffzelle zuzuführenden Gasstrom vermischt wird. Das durch die Beheizung verdampfte Frostschutzmittel wird mittels entsprechender Einrichtungen aufgefangen, kondensiert und anschließend in den Flüssigkeitsspeicher zurückgeführt.

Durch die Erfindung wird ein bisher beträchtliches Problem gelöst, nämlich daß der Einsatz des Brennstoffzellensystems auch bei Temperaturen unter 0° C möglich sein muß. Bei solch niedrigen Temperaturen kann nämlich die Flüssigkeit im Flüssigkeitsspeicher, insbesondere wenn hierfür Wasser verwendet wird, gefrieren. Somit wäre eine ausreichende Befeuchtung der Brennstoffzellen-Membran beim Anfahren der Brennstoffzelle nicht mehr gewährleistet. Durch das Frostschutzmittel wird das Gefrieren der Flüssigkeit vermieden. Über die Heizeinrichtung wird erreicht, daß das in der Flüssigkeit befindliche Frostschutzmittel vor deren Zumischung zu dem der Brennstoffzelle zuzuführenden Gasstrom herausdestilliert wird.

Bevorzugte Ausführungsformen des erfindungsgemäßen Brennstoffzellensystem ergeben sich aus den Unteransprüchen.

Vorzugsweise ist der Flüssigkeitsspeicher zur Aufnahme einer Flüssigkeit zum Befeuchten des Brennstoffs und/oder des Oxidationsmittels vorgesehen. Vorteilhaft wird als geeignete Flüssigkeit Wasser verwendet, das geeignet ist, das Oxidationsmittel und/oder den Brennstoff sowie die Membran der Brennstoffzelle zu befeuchten.

Je nach Bedarf und Anwendungsfall ist es denkbar, daß nur das Oxidationsmittel oder nur der Brennstoff befeuchtet wird. Genauso ist es jedoch auch möglich, daß sowohl der Brennstoff als auch das Oxidationsmittel befeuchtet werden.

Vorzugsweise ist die Heizeinrichtung als elektrische Heizvorrichtung ausgebildet. Die elektrische Heizvorrichtung ist vorteilhaft im Flüssigkeitsspeicher angeordnet. Die benötigte elektrische Energie wird in der ersten Zeit, d.h. in der Zeit des Anfahrens der Brennstoffzelle, durch eine elektrische Batterie zur Verfügung gestellt. Die elektrische Heizvorrichtung kann beispielsweise, jedoch nicht ausschließlich, als Heizdraht, Heizspule oder dergleichen ausgebildet sein.

In anderer Ausgestaltung kann die Heizeinrichtung eine Strömungsleitung für ein Heizmedium aufweisen. Dabei kann die Strömungsleitung zur Vergrößerung ihrer Wärmetauschfläche als Rohrschlange oder dergleichen ausgebildet sein. Die Strömungsleitung wird von dem Heizmedium durchströmt, wodurch ein Wärmeaustausch zwischen dem Heizmedium und der Flüssigkeit erfolgt.

Vorzugsweise ist die Heizeinrichtung als geschlossenes System ausgebildet. Auf diese Weise kann die Menge des in der Strömungsleitung zirkulierenden Heizmediums reduziert werden, da während eines Umlaufzyklusses kein Heizmedium aus der Strömungsleitung entweichen kann.

Vorteilhaft ist in der Strömungsleitung eine Fördereinrichtung für das Heizmedium vorgesehen. Über eine solche Fördereinrichtung kann die Strömungsgeschwindigkeit des Heizmediums innerhalb der Strömungsleitung je nach Bedarf eingestellt werden. Die Strömungsgeschwindigkeit des Heizmediums beeinflußt nämlich die Wärmeaustauschrate zwischen dem Heizmedium und der im Flüssigkeitsspeicher befindlichen Flüssigkeit.

Je nach Art des verwendeten Heizmediums kann die Fördereinrichtung unterschiedlich ausgebildet sein. Wenn beispielsweise ein flüssiges Heizmedium wie Wasser, Öl oder dergleichen verwendet wird, ist die Fördereinrichtung vorzugsweise als Pumpe ausgebildet. Wird als Heizmedium beispielsweise ein Gas wie Luft oder dergleichen verwendet, ist die Fördereinrichtung vorzugsweise als Gebläse ausgebildet. Die Erfindung ist nicht auf die genannten Fördereinrichtungen beschränkt.

In weiterer Ausgestaltung ist ein Heizelement zum Beheizen des Heizmediums vorgesehen. Vorteilhaft ist das Heizelement als Brenner, insbesondere als katalytischer Brenner, ausgebildet. Über den Brenner wird das in der Strömungsleitung befindliche Heizmedium auf die erforderliche Temperatur erhitzt, bevor es zur Beheizung der Flüssigkeit eingesetzt wird. Das Heizelement kann aber auch anders, beispielsweise als elektrisches Heizelement ausgebildet sein. Die Erfindung ist nicht auf besondere Ausgestaltungsformen des Heizelements beschränkt.

Das in der Brennstoffzelle als Reaktionsprodukt entstehende Wasser wird mit dem Abgas aus der Brennstoffzelle abgeführt. Vorteilhaft ist daher in der Ableitung für den Brennstoff und/oder in der Ableitung für das Oxidationsmittel eine Vorrichtung zum Auskondensieren von Flüssigkeit vorgesehen. Die Vorrichtung zum Auskondensieren von Flüssigkeit ist mit dem Flüssigkeitsspeicher verbunden.

Dadurch wird es möglich, das bei der Erzeugung von Strom in der Brennstoffzelle erzeugte Produktwasser zu gewinnen. Da der Abgasstrom der Brennstoffzelle in der Regel sehr warm ist, liegt das im Abgasstrom der Brennstoffzelle befindliche Wasser üblicherweise in Form von Wasserdampf vor. Durch die Vorrichtung zum Auskondensieren von Flüssigkeit wird es möglich, den Wasserdampf in den flüssigen Zustand zu überführen, so daß das Wasser anschließend für weitere Prozesse im Umgebungsbereich der Brennstoffzelle, also insbesondere zum Befeuchten des Brennstoffs und/oder des Oxidationsmittels genutzt werden kann.

Die Vorrichtung zum Auskondensieren von Flüssigkeit kann in der Ableitung für das Oxidationsmittel (Kathodenabgas), in der Ableitung für den Brennstoff (Kathodenabgas) oder auch in beiden Ableitungen vorgesehen sein. Sie ist insbesondere immer dort von Vorteil, wo sich im Abgasstrom sehr viel Wasser in Form von Wasserdampf befindet. Allerdings muß gewährleistet werden, daß bei der Gewinnung von Wasser aus dem Abgasstrom keine schädlichen Bestandteile, die die Brennstoffzelle beschädigen könnten, mit ausgetragen werden und sich aufkonzentrieren. In vorteilhafter Ausgestaltung ist die Vorrichtung zum Auskondensieren von Flüssigkeit, insbesondere zum Auskondensieren von Wasser deshalb in der Ableitung für das Oxidationsmittel angeordnet, insbesondere dann, wenn als Oxidationsmittel Sauerstoff verwendet wird.

Das auf diese Weise erzeugte Wasser kann in den Flüssigkeitsspeicher eingespeist werden, so daß eine separate Wasserquelle entfallen kann. Der Flüssigkeitsspeicher erfüllt in diesem Fall auch die Funktion eines Zwischenspeichers. Das während des Betriebs der Brennstoffzelle erzeugte überschüssige Wasser, das nicht zur Befeuchtung der Brennstoffzellen-Membran benötigt wird, wird in dem Flüssigkeitsspeicher gespeichert und steht somit zur Verfügung, wenn die Brennstoffzelle abgeschaltet wurde und zu einem späteren Zeitpunkt erneut angefahren wird.

Auch wenn sowohl der Brennstoff als auch das Oxidationsmittel angefeuchtet werden sollen, empfiehlt es sich, lediglich einen einzigen Verdampfer vorzusehen, in dem über die Heizeinrichtung das Frostschutzmittel verdampft wird und von dem direkt oder indirekt Leitungen ausgehen, die die vom Frostschutzmittel befreite Flüssigkeit in die beiden Zuleitungen für den Brennstoff und das Oxidationsmittel einspeisen. Dabei wird das verdampfte Frostschutzmittel aus dem Verdampfer über eine separate Leitung abgezogen und zur Kondensation in einen Kondensator geführt. Das dort gebildete Kondensat des Frostschutzmittels wird über eine weitere Leitung in den Flüssigkeitsspeicher zurückgeführt.

Das im Flüssigkeitsspeicher befindliche Wasser kann beispielsweise aber auch durch einen Destillierprozeß gewonnen werden.

Vorzugsweise kann ein wie vorstehend beschriebenes erfindungsgemäßes Brennstoffzellensystem zum Betreiben eines Fahrzeuges verwendet werden.

Auf Grund der rasanten Entwicklung der Brennstoffzellentechnologie im Fahrzeugsektor bietet eine solche Verwendung des Brennstoffzellensystems zur Zeit besonders gute Einsatzmöglichkeiten. Dennoch sind auch andere Einsatzmöglichkeiten denkbar. Zu nennen sind hier beispielsweise Brennstoffzellen für mobile Geräte wie Computer oder mobile Telefone bis hin zu Kraftwerksanlagen. Auch eignet sich die Brennstoffzellentechnik für die dezentrale Energieversorgung von Häusern, Industrieanlagen oder dergleichen.

In bevorzugter Weise wird die vorliegende Erfindung in Verbindung mit Brennstoffzellen mit Polymermembranen (PEM) verwendet. Diese Brennstoffzellen haben einen hohen elektrischen Wirkungsgrad, verursachen nur minimale Emissionen, weisen ein optimales Teillastverhalten auf und sind im wesentlichen frei von mechanischem Verschleiß.

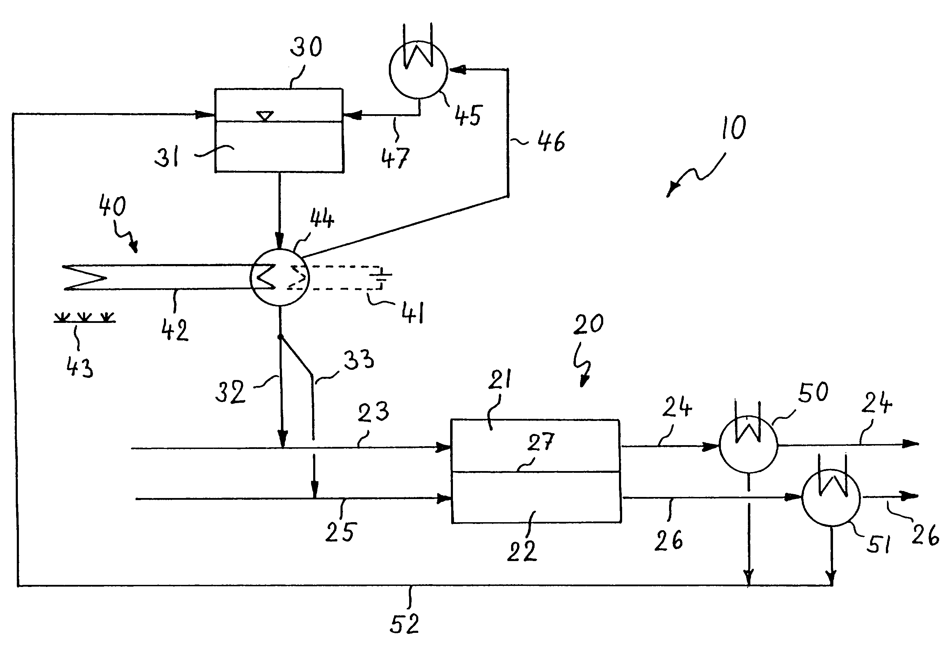

Die Erfindung wird nun auf exemplarische Weise an Hand eines Ausführungsbeispiels unter Bezugnahme auf die einzige Figur näher erläutert.

In der Figur ist ein Brennstoffzellensystem 10 dargestellt, das eine Brennstoffzelle 20, einen Flüssigkeitsspeicher 30 und eine Heizeinrichtung 40 aufweist.

Die Brennstoffzelle 20 weist einen Anodenteil 21 auf, der mit einer Zuleitung 23 und einer Ableitung 24 für einen Brennstoff, im vorliegenden Fall Wasserstoff, verbunden ist. Weiterhin weist die Brennstoffzelle 20 einen Kathodenteil 22 auf, der mit einer Zuleitung 25 und einer Ableitung 26 für ein Oxidationsmittel, im vorliegenden Fall Sauerstoff, verbunden ist. Der Anodenteil 21 und der Kathodenteil 22 sind über eine Membran 27, im vorliegenden Fall eine Polymermembran, voneinander getrennt.

Sowohl die Zuleitung 23 für den Brennstoff als auch die Zuleitung 25 für das Oxidationsmittel sind über entsprechende Leitungen 32, 33 mit dem Flüssigkeitsspeicher 30 verbunden. In dem Flüssigkeitsspeicher 30 ist eine Flüssigkeit 31, im vorliegenden Fall Wasser, gespeichert. Über die Flüssigkeit 31 werden der die Zuleitung 23 durchströmende Brennstoff und das die Zuleitung 25 durchströmende Oxidationsmittel befeuchtet.

Nachfolgend wird nun die Funktionsweise des Brennstoffzellensystems 10 beschrieben. Um die Funktionsfähigkeit der Brennstoffzelle 20 zu gewährleisten, ist es erforderlich, daß die Membran 27 ständig feucht gehalten wird. Während des Betriebs der Brennstoffzelle 20 erfolgt die Befeuchtung unmittelbar über das in der Brennstoffzelle 20 erzeugte Wasser. Insbesondere beim Anfahren der Brennstoffzelle 20 entsteht jedoch noch kein Wasser. Dennoch ist auch schon zu diesem Zeitpunkt eine Befeuchtung der Membran 27 erforderlich. Aus diesem Grund werden der Brennstoffstrom und der Strom des Oxidationsmittels über den Flüssigkeitsspeicher 30 entsprechend befeuchtet, so daß in der Anfahrphase der Brennstoffzelle 20 die Befeuchtung der Membran 27 über den feuchten Brennstoffstrom und den feuchten Stroms des Oxidationsmittels erfolgt.

Insbesondere dann, wenn das Brennstoffzellensystem in einem Fahrzeug eingesetzt wird, kann es geschehen, daß die Temperatur in der Umgebung des Brennstoffzellensystems 10 den Gefrierpunkt unterschreitet. In diesem Fall besteht die Gefahr, daß das im Flüssigkeitsspeicher 30 befindliche Wasser 31 gefriert. Dann wäre eine ausreichende Befeuchtung der Membran 27 beim Anfahren der Brennstoffzelle 20 nicht mehr gewährleistet.

Zur Verhinderung eines Einfrierens des Wassers 31 ist diesem als Frostschutzmittel z.B. Methanol zugemischt worden. Damit das Frostschutzmittel nicht in die Brennstoffzelle 20 gelangt ist ein Verdampfer 44 mit einer Heizeinrichtung 40 vorgesehen, über die das aus dem Flüssigkeitsspeicher 30 entnommene Wasser 31 soweit erwärmt werden kann, dass das Frostschutzmittel verdampft und nur noch reines Wasser 31 über die Leitung 32, 33 in die Zuleitungen 23, 25 für den Brennstoff bzw. das Oxidationsmittel gelangt..

Beim dargestellten Ausführungsbeispiel weist die Heizeinrichtung 40 eine als geschlossenes System ausgebildete Strömungsleitung 42 auf, die von einem geeigneten Heizmedium, beispielsweise Wasser, Öl oder dergleichen, durchströmt wird. Die Strömungsleitung 42 kann im Bereich des Verdampfers 44 als Rohrschlange ausgebildet sein. Dadurch wird zum Zwecke des Wärmeausstauschs eine große Oberfläche der Strömungsleitung 42 bereitgestellt. Bevor das Heizmedium den im Verdampfer 44 befindlichen Bereich der Strömungsleitung 42 erreicht, wird es über ein geeignetes Heizelement 43, im vorliegenden Fall einen katalytischen Brenner, auf die erforderliche Temperatur gebracht. Das so erhitzte Heizmedium durchläuft den Verdampfer 44, wo es die Wärme an das mit dem Frostschutzmittel vermischte Wasser 31 abgibt. Dadurch kann das Frostschutzmittel verdampfen und über eine Leitung 46 als Dampf abgezogen werden. Das nach dem Verlassen des Verdampfers 44 abgekühlte Heizmedium wird über die Strömungsleitung 42 erneut dem Brenner 43 zugeführt und dort erhitzt. Anschließend tritt das erhitzte Heizmedium erneut in den Verdampfer 44 ein. Als Alternative zu der mit einer Strömungsleitung 42 versehenen Heizeinrichtung 40 kann auch eine elektrische Heizvorrichtung 41 eingesetzt werden, die n der Figur gestrichelt dargestellt ist. Der aus dem Verdampfer 44 durch die Leitung 46 abgezogene Dampf des Frostschutzmittels gelangt in einen Kondensator 45, wird dort durch Abkühlung kondensiert und in flüssiger Form über die Leitung 47 in den Flüssigkeitsspeicher 30 zurückgeführt.

In der Figur sind weiterhin zwei Kondensatoren 50, 51 dargestellt die in die beiden Ableitungen 24, 26 für das Anoden- bzw. Kathodenabgas eingeschaltet sind und Wasser aus den beiden Abgasströmen der Brennstoffzelle 20 kondensieren. Dieses Kondensat kann über eine Leitung 52 in den Flüssigkeitsspeicher 30 eingespeist werden, um bei Bedarf den Flüssigkeitsspiegel aufzufüllen.

### Bezugszeichenliste

- 10 =: Brennstoffzellensystem
- 20 =: Brennstoffzelle
- 21 =: Anodenteil
- 22 =: Kathodenteil
- 23 =: Zuleitung Brennstoff
- 24 =: Ableitung Brennstoff
- 25 =: Zuleitung Oxidationsmittel
- 26 =: Ableitung Oxidationsmittel
- 27 =: Membran
- 30 =: Flüssigkeitsspeicher
- 31 =: Flüssigkeit
- 32 =: Leitung
- 33 =: Leitung
- 40 =: Heizeinrichtung
- 41 =: elektrische Heizvorrichtung
- 42 =: Strömungsleitung
- 43 =: Heizelement
- 44 =: Verdampfer
- 45 =: Kondensator
- 46 =: Leitung
- 47 =: Leitung
- 50 =: Kondensator
- 51 =: Kondensator
- 52 =: Leitung

## Patentansprüche

1. Brennstoffzellensystem, mit einer Brennstoffzelle (20), die eine Zuleitung (23) für einen Brennstoff und eine Zuleitung (25) für ein Oxidationsmittel sowie eine Ableitung (24) für den Brennstoff und eine Ableitung (26) für das Oxidationsmittel aufweist, wobeidie Zuleitung (23) für den Brennstoff und/oder die Zuleitung (25) für das Oxidationsmittel mit einem Flüssigkeitsspeicher (30), insbesondere einem Wasserspeicher, verbunden ist, dadurch gekennzeichnet,
daß eine Heizeinrichtung (40) zum Beheizen der im Flüssigkeitsspeicher (30) befindlichen Flüssigkeit (31) vorgesehen ist, die in der Zuleitung (23) für den Brennstoff und/oder in der Zuleitung (25) für das Oxidationsmittel angeordnet und in ihrer Heizleistung auf eine vollständige Verdampfung eines in der Flüssigkeit enthaltenen Frostschutzmittels ausgelegt ist, und daß Einrichtungen zum Auffangen, Kondensieren und Zurückführen des verdampften Frostschutzmittels in den Flüssigkeitsspeicher (31) vorgesehen sind.

2. Brennstoffzellensystem nach Anspruch 1,
dadurch gekennzeichnet,
daß die Heizeinrichtung (40) als elektrische Heizvorrichtung (41) ausgebildet ist.

3. Brennstoffzellensystem nach Anspruch 1,
dadurch gekennzeichnet,
daß die Heizeinrichtung (40) eine Strömungsleitung (42) für ein Heizmedium aufweist.

4. Brennstoffzellensystem nach Anspruch 3,
dadurch gekennzeichnet,
daß die Heizeinrichtung (40) als geschlossenes System ausgebildet ist.

5. Brennstoffzellensystem nach einem der Ansprüche 3 bis 4,
dadurch gekennzeichnet,
daß in der Strömungsleitung (42) eine Fördereinrichtung für das Heizmedium vorgesehen ist.

6. Brennstoffzellensystem nach einem der Ansprüche 3 bis 5
dadurch gekennzeichnet,
daß ein Heizelement (43) zum Beheizen des Heizmediums vorgesehen ist.

7. Brennstoffzellensystem nach einem der Ansprüche 1 bis 6,
dadurch gekennzeichnet,
daß in der Ableitung (24) für den Brennstoff und/oder in der Ableitung (26) für das Oxidationsmittel eine Vorrichtung zum Auskondensieren von Flüssigkeit vorgesehen ist und daß die Vorrichtung zum Auskondensieren von Flüssigkeit mit dem Flüssigkeitsspeicher (30) verbunden ist.

8. Brennstoffzellensystem nach einem der Ansprüche 1 bis 7,
dadurch gekennzeichnet,
daß ein einziger Verdampfer (44) vorgesehen ist, der durch die Heizeinrichtung (40) beheizbar ist und von dem direkt oder indirekt Leitungen (32, 33) ausgehen, die die vom Frostschutzmittel befreite Flüssigkeit (31) in die Zuleitungen (23, 25) für den Brennstoff und das Oxidationsmittel einspeisen, und daß das verdampfte Frostschutzmittel aus dem Verdampfer (44) über eine Leitung (46) in einen Kondensator (45) einleitbar und aus diesem als Kondensat über eine Leitung (47) in den Flüssigkeitsspeicher (30) rückführbar ist.

9. Verwendung eines Brennstoffzellensystems nach einem der Ansprüche 1 bis 8 in einem Fahrzeug.
